# FASCICULE DE BREVET EUROPEEN

(11) **EP 0 596 793 B1**
(45) Date de publication et mention de la délivrance du brevet: **02.04.1997**
(21) Numéro de dépôt: 93402688.1
(22) Date de dépôt: 02.11.1993
(51) Int. Cl.: G01M 3/38

(54) **Système de repérage d'un tube dans une boîte à eau de générateur de vapeur et procédé de mise en oeuvre de ce système**
System zur Positionsidentifizierung einer Leitung in einem Wasserbehälter eines Dampferzeugers und Verfahren dazu
System for indentification of the position of a tube in a water container of a steam generator and procedure therefor

(30) Priorité: 03.11.1992 FR 9213155
(43) Date de publication de la demande: 11.05.1994
(73) Titulaire: ELECTRICITE DE FRANCE Service National, 75008 Paris (FR)
(72) Inventeur: Trouville, Bernard, F-92000 Nanterre (FR); Garnero, Marie-Agnès, F-78290 Croissy sur Seine (FR); Cers, Philippe, F-78800 Houilles (FR); Pot, Jacques, Résidence Beau Soleil -A7, F-92210 Saint Cloud (FR); Goulette, François, F-44100 Nantes (FR)
(74) Mandataire: Dubois-Chabert, Guy

(56) Documents cités:
- EP-A- 0 108 587
- FR-A- 2 409 503
- GB-A- 2 097 626
- PATENT ABSTRACTS OF JAPAN vol. 11, no. 373 (P-643) 5 décembre 1987; & JP-A-62 144 038

## Description

### Domaine technique

La présente invention a pour objet un système de repérage d'un tube dans une boîte à eau de générateur de vapeur et un procédé de mise en oeuvre de ce système.

### Etat de la technique antérieure

Un générateur de vapeur de centrale nucléaire à eau légère pressurisée procède à un échange de chaleur entre un circuit primaire et un circuit secondaire de circulation de fluide grâce à un faisceau de tubes. La sécurité de l'exploitation exclut tout passage de fluide du circuit primaire vers le circuit secondaire. Lorsqu'une fuite se produit, des dispositifs de détection et de mesure déterminent, au vu d'un seuil critique, s'il y a nécessité d'un arrêt et d'une réparation.

Les deux boîtes à eau (entrée et sortie) du circuit primaire sont alors vidées et ouvertes pour permettre l'accès à la plaque tubulaire. Le circuit secondaire reste plein d'eau sous pression, des gouttes provenant de la fuite tombent dans l'une des boîtes par l'orifice du tube défectueux. Il est nécessaire d'identifier ce tube pour déterminer l'autre extrémité débouchant dans l'autre boîte, afin de le mettre hors circuit par obstruction de ses deux extrémités.

Le travail d'identification demande beaucoup d'attention et un temps relativement long, ce qui est incompatible avec la contamination des parois et l'inconfort de la position de l'opérateur.

Un dispositif de l'art connu, le dispositif "Scarabée" pour la recherche des fuites et le repérage des tubes dans les générateurs de vapeur, tel que décrit dans un article d'Electricité de France (exposition MESUCORA 1979), permet d'effectuer cette opération à distance. L'opérateur n'intervient plus à l'intérieur des boîtes à eau que pour placer rapidement un boîtier étanche et puis des bouchons sur des orifices clairement indiqués.

Ce dispositif "Scarabée" se compose des équipements suivants :
- un boîtier étanche ;
- un pupitre d'alimentation et de commande ;
- un moniteur de visualisation ;
- des cordons de liaison.

Le boîtier étanche comprend :
- une plaque de fond ;
- une voie caméra, installée sur un support tournant, comportant un dispositif de miroir orientable. Un potentiomètre de recopie donne la position du miroir. Deux microrupteurs limitent le débattement du miroir en réalisant deux butées électriques ;
- une voie projecteur ultra-violet de marquage installée sur un autre support tournant, comportant un projecteur ultra-violet qui a pour fonction d'éclairer la partie de la demi-plaque tubulaire visualisée par la voie caméra. La lumière émise par la lampe est orientée au moyen d'un dispositif de miroir orientable et d'un support mobile. Comme pour la voie caméra, le déplacement du miroir se fait selon l'axe des ordonnées, celui du support suivant l'axe des abscisses. Deux potentiomètres de recopie donnent les positions respectives de cette voie de marquage ;
- une électronique de centrale fixée sur la plaque de fond auprès du bloc d'analyse de la voie caméra est constituée de six cartes dont cinq sont enfichables : une carte alimentation CCD ; une carte générateur de réticule ; une carte vidéo ; une carte "timer" ; une carte "phases". Toutes ces cartes sont enfichées sur une carte mère qui réalise l'interconnexion de l'électronique de centrale ;
- deux projecteurs d'éclairage ambiant.

Le pupitre d'alimentation et de commande est composé d'une platine de commande en partie basse et d'un boîtier d'alimentation en partie haute, le moniteur de visualisation étant placé sur la partie haute.

La platine de commande réalise les réglages et les déplacements du boîtier étanche. Pour cela, huit potentiomètres de réglages initialisent la voie caméra et la voie de marquage. Un potentiomètre permet de faire varier la vitesse de déplacement du boîtier. Elle comporte un synoptique représentant la plaque tubulaire.

Trois inverseurs commandent les fonctions zoom (diaphragme, mise au point, focale).

Quatre potentiomètres linéaires commandent le déplacement en abscisse et en ordonnée des voies caméra et de marquage.

Un poussoir de mémorisation permet de repérer la position d'un tube défectueux en mémorisant l'emplacement du réticule, ceci pour une durée maximum de quatre heures.

Fixées sous la platine de commande, se trouvent trois cartes électroniques : une carte mémoire, une carte commande, et une carte mère.

L'observateur de fuite des tubes de la plaque tubulaire par ce dispositif "Scarabée" repose sur le principe suivant. En cas de fuite, de l'eau chargée de fluorescéine s'échappe des tubes. Cette dernière, éclairée par le projecteur ultra-violet, émet un rayonnement de bande spectrale connue. Après filtrage, seul ce dernier est pris en compte par la caméra logée dans le boîtier. En conséquence, l'opérateur ne visualise sur l'écran que les tubes défectueux, l'image des autres demeurant noire. Un réticule, incrusté dans le signal vidéo, repère le tube visualisé et permet ainsi la détermination de sa position sur la plaque tubulaire au moyen d'un schéma synoptique représentant la plaque observée.

L'examen à distance de la plaque tubulaire s'effectue à l'aide de la caméra. L'axe de visée de cette caméra, pour parcourir toute la surface de la plaque tubulaire qui délimite la partie supérieure de la boîte à eau, doit effectuer deux rotations d'amplitudes respectives de 100 et 50 degrés, dans deux plans perpendiculaires. Ces excursions sont assurées l'une par le support tournant portant la caméra, l'autre par le miroir orientable placé devant l'objectif de la caméra. Les mouvements de rotation de ce support et du miroir sont commandés à distance de manière indépendante à partir du pupitre de commande. Le marquage du tube défectueux s'effectue par la projection sur l'orifice de ce tube d'un repère lumineux extrêmement visible à la fois sur la plaque tubulaire et sur l'écran de contrôle du poste de commande.

Afin de permettre une détermination précise des coordonnées du tube défectueux, les positions des supports et des miroirs sont asservies à la position des commandes en utilisant un réglage analogique par rapport à au moins une position d'origine connue.

Trois pieds assurent une parfaite stabilité du boîtier étanche quelle que soit la forme du fond sur lequel repose le boîtier. Un hublot situé dans la partie supérieure du boîtier permet l'éclairage, la prise de vues et la projection du repère. La mise en place du boîtier s'effectue en le laissant glisser, après l'avoir introduit par un trou d'homme, dans la boîte à eau jusqu'à ce qu'il s'appuie contre la plaque de séparation. Les dimensions extérieures s'inscrivent dans un parallélépipède d'environ 600 x 350 x 150 mm³. Une seule personne peut manipuler cet appareil dont le poids est inférieur à 20 Kg.

En fonctionnement on peut disposer un boîtier étanche dans chacune des boîtes à eau du générateur de vapeur, les deux pupitres de commande côte à côte dans une zone non irradiée. Les gouttes d'eau observées sur l'un des écrans, l'orifice étant alors marqué par le repère lumineux, permettent de déterminer les coordonnées du tube sur le synoptique correspondant. Ces caractéristiques reportées sur le synoptique du second pupitre assurent la projection du repère sur l'autre extrémité du même tube. Ces opérations effectuées dans une zone non contaminée peuvent être reprises plusieurs fois afin d'éliminer tout risque d'erreur. L'expérience a montré que l'observation de la plaque tubulaire, durant un temps suffisant, permettait de déceler des fuites d'une goutte toutes les trois secondes.

Mais un tel dispositif présente plusieurs inconvénients :
- obligation de caler le boîtier étanche dans une position donnée : contre la plaque de partition entre les deux boîtes à eau ;
- temps non négligeable de mise en place ;
- difficulté d'initialisation ;
- système pas toujours fiable ;
- dérive de l'électronique analogique au cours du temps ;
- image de qualité moyenne ;
- encombrement et poids non négligeables.

Une demande de brevet français numéro FR-A-2 409 503 (EDF) décrit un procédé de repérage d'un tube défectueux qui consiste à transmettre sur un dispositif de visualisation extérieur au générateur une image de la plaque à tubes dans chaque collecteur au moyen d'une caméra de télévision orientable, puis à superposer sur ladite image un repère lumineux jouant le rôle de marqueur pour repérer l'extrémité du tube défectueux, ledit repère étant obtenu à l'aide d'un projecteur également orientable, commandé indépendamment de la caméra.

Cette demande concerne également un dispositif pour la mise en oeuvre de ce procédé, qui comporte dans chaque collecteur un caisson portant deux supports, respectivement pour une caméra de télévision et un projecteur, présentant chacun un axe de visée parallèle autour duquel le support correspondant est monté mobile en rotation, deux miroirs associés respectivement à la caméra et au projecteur, montés mobiles sur le support correspondant autour d'un axe perpendiculaire à l'axe de rotation de la caméra et du projecteur, des moyens pour provoquer indépendamment sur les supports les mouvements de la caméra et du projecteur et de leurs miroirs associés, permettant un balayage de toute la surface de la plaque à tubes, des moyens pour éclairer cette plaque à tubes, des moyens pour transmettre l'image donnée par la caméra de la plaque à tubes et du marqueur fourni par le projecteur vers le dispositif de visualisation extérieur au générateur et un pupitre de commande comportant un schéma synoptique de la plaque tubulaire et des organes de commande à distance des moyens provoquant les mouvements de la caméra et du projecteur.

### Exposé de l'invention

Pour pallier les inconvénients de l'art antérieur, l'invention a pour objet un système simple à mettre en oeuvre, facile d'utilisation, grâce auquel l'opérateur connaît a tout moment les références du tube présenté sur un écran de contrôle.

l'invention propose à cet effet un système de repérage d'un tube dans une boîte à eau de générateur de vapeur comportant :
- au moins un boîtier étanche destiné à être déposé au fond de la boîte à eau de ce générateur de vapeur, dans lequel sont disposés :
   . une caméra mobile,
   . un dispositif d'éclairage assurant une luminosité suffisante pour la prise d'image,
   . un dispositif de projection mobile, sur le centre d'un trou de tube à la surface de la plaque, d'un indice lumineux à l'endroit qui est visualisé au centre de l'image,
   . un dispositif de fixation ;
- une unité de contrôle des paramètres de prise de vues, de l'éclairage et de l'indice lumineux ;
- un pupitre de commande comportant une unité de visualisation, situé en dehors de la boîte à eau ;
caractérisé en ce que des capteurs absolus sont utilisés pour connaître les positions respectives de la caméra et du dispositif de projection, et en ce que l'unité de contrôle est située en dehors de la boîte à eau.

Dans une réalisation particulière, la caméra est motorisée selon deux axes de rotation perpendiculaires, l'objectif de la caméra possède une focale variable motorisée, le dispositif d'éclairage et le dispositif de projection sont solidaires du boîtier de la caméra, le dispositif de projection émet une croix lumineuse clignotante réalisée grâce à deux spots laser déviés par des prismes semi-cylindriques.

Avantageusement l'unité de contrôle est reliée à une unité de traitement avec laquelle elle dialogue via une liaison série standard.

Avantageusement un tel système est capable de visualiser la surface d'un trou sur la totalité de l'image afin de permettre une bonne précision dans le pointage du centre de celui-ci, mais aussi de permettre certains contrôles visuels (présence de bouchons rasants, ...). Il peut scruter la totalité de la surface de la plaque pour indexer l'ensemble des tubes. Enfin, il permet par le changement de l'angle d'ouverture, la visualisation d'un nombre suffisant de trous afin que l'opérateur puisse se repérer sur les indices intrinsèques de la plaque. Le centrage de l'image sur un trou est suffisamment précis pour pointer sans erreur le tube désigné.

Les conditions d'éclairage et d'état de surface des parois internes de la boîte à eau du générateur de vapeur sont difficiles pour une caméra standard. Le système de l'invention permet de s'adapter à ces conditions afin que l'opérateur dispose d'une image de bonne qualité et que les contours des trous puissent permettre l'utilisation d'algorithmes de traitement d'image.

Ainsi l'invention permet d'améliorer de façon importante les conditions de travail du personnel intervenant sur la maintenance des générateurs de vapeur.

L'invention concerne également un procédé de mise en oeuvre du système décrit ci-dessus, caractérisé en ce qu'il comprend :
- une étape de mise en place du boîtier étanche dans la boîte à eau du générateur de vapeur ;
- une étape de mise en route du système ;
- une étape d'initialisation du système (site d'intervention, type de générateur de vapeur, boîte à eau chaude ou froide) ;
- une étape d'initialisation comprenant la calibration du système durant laquelle on positionne successivement l'image d'un tube parmi plusieurs tubes déterminés au centre de l'image, en donnant ses numéros de ligne et de colonne ; le calcul des paramètres donnant la position du système dans l'environnement (seulement le chargement de ces paramètres dans le cas où le boîtier n'a pas bougé) et le chargement des paramètres du système ;
- une étape d'exploitation permettant au système de pointer un tube désigné par ses numéros de ligne et de colonne, ou de donner les numéros de ligne et de colonne d'un tube visualisé au centre de l'image.

Le procédé de l'invention permet un gain important sur les temps d'intervention, une amélioration des conditions opératoires, une diminution des doses cumulées par les opérateurs intervenant dans la boîte à eau du générateur de vapeur et une diminution des coûts d'intervention.

### Brèves description des dessins

- La figure 1 illustre le système de l'invention, un boîtier étanche étant introduit dans la boîte à eau d'un générateur de vapeur ;
- la figure 2 illustre un ensemble faisant partie du système de l'invention ;
- la figure 3 illustre les différentes étapes du procédé de mise en oeuvre du système de l'invention.

### Exposé détaillé de modes de réalisation

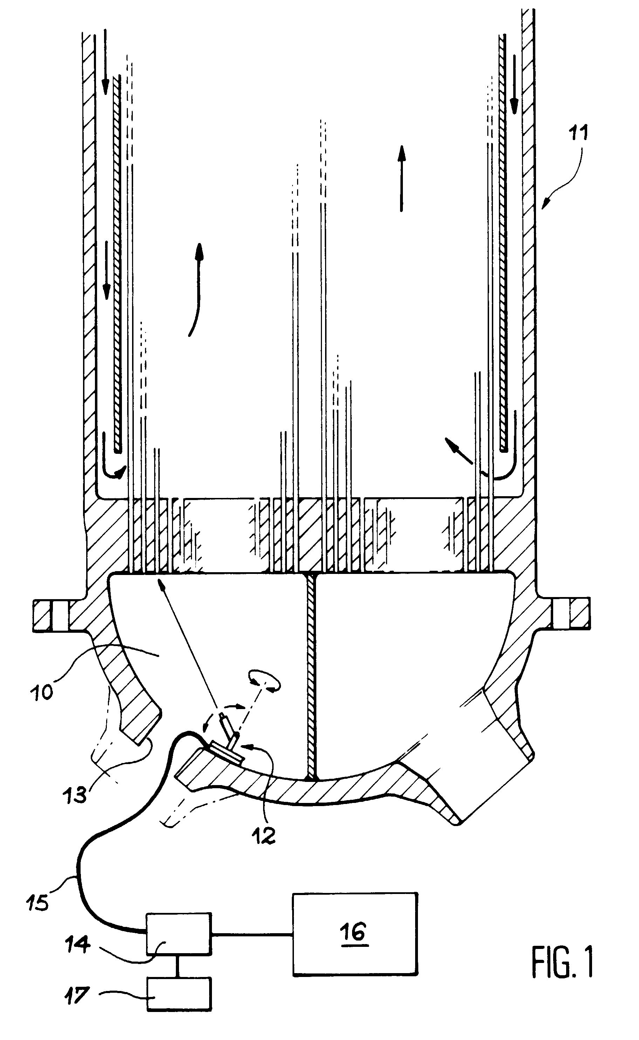

La figure 1 illustre le système de repérage de tube de l'invention. Un ensemble mobile 12 est déposé n'importe où au fond de la boîte à eau 10 d'un générateur de vapeur 11, par exemple à proximité d'un trou d'homme 13. Il est relié à une unité de contrôle à distance 14 par une liaison électrique 15, elle-même connectée à un pupitre commande 17 comprenant une unité de visualisation. Avantageusement une unité de traitement 16 est reliée à cette unité de contrôle.

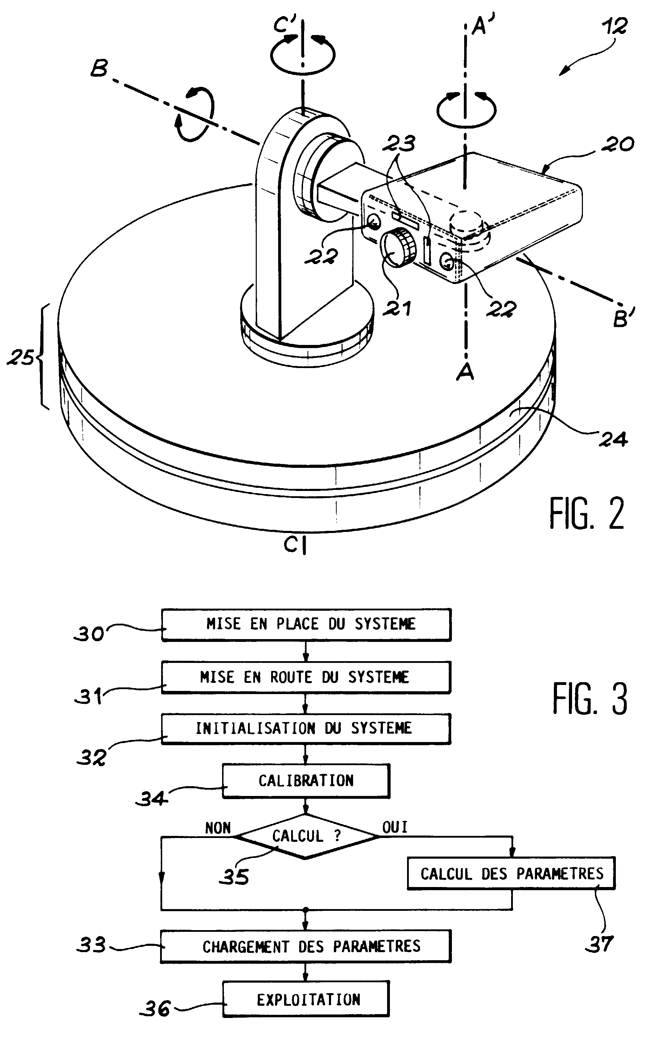

Comme représenté sur la figure 2, le système de repérage de l'invention comprend :
- l'ensemble mobile 12 comportant :
   . une caméra vidéo 20 munie d'un objectif 21 à focale variable, motorisée selon deux axes de rotation AA' et BB', l'un étant dépendant de l'autre. Des codeurs absolus sont disposés sur chacun de ces axes pour pouvoir connaître la position de la caméra. Les paramètres de prise de vues (zoom, focus,...) sont commandables à distance,
   . un dispositif d'éclairage 22, par exemple focalisé, ou tout autre système (temps d'intégration variable, autoiris) assurant une luminosité suffisante pour la prise d'image, dont la puissance est commandable à distance,
   . un dispositif de projection 23 par exemple selon l'axe optique de la caméra et solidaire du boîtier de celle-ci, sur la surface de la plaque, d'un indice lumineux, par exemple clignotant, à l'endroit exact qui est visualisé au centre de l'image,
   . un dispositif 25 de fixation et/ou de détection de mouvement de l'ensemble caméra qui peut comporter un plateau 24 mobile en rotation selon un axe CC' pour permettre le positionnement de l'ensemble. Ce système est prévu pour assurer l'intégrité du repère et des différents paramètres calculés lors de la calibration ;
- l'unité de contrôle à distance 14 permettant le contrôle des paramètres de prise de vues, de la position de la caméra donnée par les capteurs absolus, de l'éclairage et du (ou des) indice(s) lumineux ;
- éventuellement une unité de traitement 17 assurant les fonctions de :
   . interface avec L'unité de contrôle,
   . commande de déflexion de la caméra et de lecture de la position de celle-ci,
   . commande des paramètres de l'objectif (zoom et éventuellement focus),
   . visualisation de l'image ainsi que sa numérisation,
   . interface homme-machine,
   . calcul de la position à envoyer à la caméra pour le pointage d'un trou désigné par ses numéros de ligne et de colonne,
   . calcul des numéros de ligne et de colonne d'un trou centré sur l'image.

La caméra 20 peut utiliser la technologie CCD ou CID pour son adaptation aux problèmes de numérisation par les cartes d'acquisition d'image. La caméra peut être de type noir et blanc ou de type couleur. Elle a une résolution suffisante pour être numérisée sur 512 x 512 pixels. Le rapport signal/bruit est au minimum de 48 DB pour utiliser toute la dynamique d'un numériseur 8 bits.

L'objectif 21 dispose d'une focale variable dont la plage de variation est suffisante pour :
- visualiser un seul trou sur la majeure partie de l'image afin de calculer avec la meilleure précision son centre de gravité (zoom fermé),
- visualiser un nombre suffisant de trous afin que l'opérateur se repère grâce aux indices intrinsèques à la plaque (zoom ouvert).

A titre d'exemple, un zoom de 12,5-75mm a des angles d'ouverture extrêmes de 49° et 8°. A l'ouverture minimum du zoom, un trou placé à l'extrémité de la plaque occupe environ un dixième de L'image dans chaque dimension (pour une position moyenne de la caméra : fond de boîte à eau, à l'aplomb du centre de la plaque).

Un dispositif d'autofocus et un dispositif d'autoiris sont prévus pour fournir en permanence une image "au point" et suffisamment claire, notamment lors des variations de zoom. Ces dispositifs peuvent être débrayables.

Le contrôle de la luminance de l'image peut être fait selon trois systèmes distincts ou associés :
- dispositif d'éclairage situé sur le même boîtier que la caméra (ensemble compact) comme représenté sur la figure 2 ;
- système de contrôle automatique de l'ouverture du diaphragme de l'objectif ;
- système de contrôle automatique du temps d'intégration de la caméra.

Le dispositif d'éclairage utilise de préférence de la lumière froide (fluorescence). La puissance lumineuse peut alors être contrôlée par l'unité de contrôle.

Le dispositif de projection d'un indice lumineux projette sur la plaque tubulaire un indice lumineux, par exemple une croix clignotante, à l'endroit exact visualisé au centre de l'image. Cet indice permet aux opérateurs de marquer le trou désigné par les moyens utilisés habituellement (produit de ressuage). La croix peut alors varier en fréquence de clignotement et en luminosité. La croix peut être projetée soit par un dispositif indépendant de la caméra, soit par le même dispositif, par exemple, grâce à deux spots lasers déviés par des prismes semi-cylindriques, ce qui permet à l'axe de projection de la croix et à l'axe optique de la caméra d'être confondus. Ainsi les deux dispositifs, caméra et indice lumineux, peuvent être dans le même boîtier ou séparés.

L'ensemble caméra-miroir-éclairage-croix lumineuse est implanté dans un boîtier fermé, étanche muni d'un hublot. La forme du boîtier dépend de l'endroit où il doit être positionné : dans le cas où il est déposé dans le fond de la boîte à eau, il doit permettre une position horizontale de la caméra. Dans ce cas, le boîtier est disposé au fond de la boîte à eau de manière à prévenir tout mouvement intempestif qui pourrait déplacer celui-ci. Ceci doit permettre au système de conserver l'intégrité de son repère et l'intégrité des différents paramètres calculés lors de la phase de calibration.

La fixation peut être faite par un système simple et facile d'utilisation (ventouse, aimant, ...) qui tienne compte des conditions de surface (dépôt de bore, beurrage inox, ...). Une fixation sur la plaque de partition du bol peut être envisagée.

Le câble de liaison 15 assure le transit de :
- l'alimentation générale ;
- la lecture des positions ;
- la commande des positions ;
- la commande de l'éclairage et de la croix lumineuse ;
- la vidéo.

On peut utiliser un câble de liaison 15 unique. Pour cela, un câble multiconducteur ou un câble monocoaxial avec multiplexage peuvent être utilisés. Ce câble a une bonne tenue mécanique (système anti-arrachement du connecteur et du câble), avec une facilité d'embrochage-débrochage du connecteur.

L'unité de contrôle 14 permet à l'opérateur de :
- contrôler les paramètres de prise de vues (zoom, iris, focus) ;
- commander l'éclairage, ainsi que l'indice lumineux.

Dans l'unité de contrôle 14, le signal vidéo issu de la caméra 20 arrive par l'intermédiaire du câble 15 sur une carte de traitement d'image. Cette carte de traitement d'image sert à générer une mire fixe centrée sur l'axe optique du système de vision qui est déterminé en laboratoire pour le couple caméra-objectif utilisé.

La méthode utilisée pour déterminer le centre optique utilise quatre cercles dessinés sur un plan que voit le système de vision. Pour les deux focales extrêmes du zoom, le centre des cercles est déterminé. L'intersection des droites reliant les centres du même cercle pour les focales extrêmes, positionne le centre optique du système. Connaissant les coordonnées de ce point, la mire peut être générée par la carte. La précision de cette méthode est suffisante pour l'application : une méthode utilisant un traitement d'image est aussi utilisable.

L'unité de traitement 16 assure les fonctions de commande des moteurs, de lecture des positions des codeurs et du boîtier de commande, de numérisation et de visualisation de l'image, d'interface homme-machine et de calcul de différentes consignes de position.

Un moniteur de bonne résolution permet de visualiser, sur un seul écran, les images provenant de la caméra, les menus de dialogue, et éventuellement un panneau de commande virtuel.

L'unité de traitement 16 est par exemple composée d'un micro-ordinateur de type PC. Les besoins en puissance de calcul, notamment lors de la phase de calibration, justifient l'utilisation d'un calculateur puissant équipé d'un coprocesseur arithmétique.

Ce calculateur est équipé de différentes cartes d'interface avec le matériel :
- une unité de commande d'axe : une telle unité doit permettre de piloter les moteurs :
   . du système de déflexion. Deux axes sont nécessaires pour les deux dimensions de variation de la caméra,
   . de l'objectif, dans le cas où celui-ci n'est pas équipé d'une interface calculateur évoluée. Dans ce cas, un axe est nécessaire par paramètre de prise d'image commandé. Ainsi, le zoom est toujours commandé par le calculateur et nécessite donc un axe. Par contre, la focale et le diaphragme ne sont pas en liaison avec le calculateur si leur contrôle est automatique (autofocus, autoiris ou iris fixe).

Une relecture des codeurs absolus est assurée dans le cas de moteurs à courant continu. Un asservissement de position est alors réalisé.
- une unité d'entrée vers l'unité de contrôle : l'interface avec l'unité de contrôle est réalisée par une carte d'entrée correspondant au type de signal de sortie du boîtier (série, TOR, ...) ;
- une unité de numérisation d'image : la numérisation est faite au minimum sur 512 x 512 pixels avec une dynamique de 8 bits. L'étage d'entrée, compatible avec celui de la caméra, répond au standard européen. La carte possède des capacités de traitement qui permettent d'implanter des algorithmes de traitement d'image (centrage, suivi, ...). A ce titre, elle a une capacité de mémoire permettant de stocker plus d'une image à la fois (au minimum 2) ;
- une unité d'incrustation vidéo : une telle unité d'incrustation vidéo temps réel permet de visualiser l'image de la caméra sur le moniteur du calculateur en même temps que le panneau de commande virtuel reproduisant tout ou partie du boîtier de commande ;
- l'interface homme-machine : il est composé :
   . de menus de dialogue guidant l'opérateur pour l'utilisation du système dans les différentes phases d'utilisation (calibration, exploitation, vérification),
   . de la visualisation en temps réel de l'image caméra et de la mire de centrage sur un trou,
   . éventuellement d'un panneau de commande virtuel.

Le procédé de l'invention, après une phase d'initialisation, assure la détermination automatique des numéros de ligne et de colonne des trous visés, en fonction des angles de rotation de la caméra. Il peut également faire le calcul inverse, à savoir donner au système de recalage les angles avec lesquels il doit faire tourner la caméra automatiquement, pour viser un trou choisi.

Il comporte les étapes suivantes :
- une étape 30 de mise en place du boîtier étanche dans la boîte à eau du générateur de vapeur et de connexion des différents éléments ;
- une étape 31 de mise en route du système ;
- une étape d'initialisation : celle-ci est nécessaire après la mise en place du boîtier étanche dans la boîte à eau ou après tout déplacement contrôlé par un inclinomètre ;
- une étape 36 d'exploitation.

Dans l'étape d'initialisation, la position du boîtier étanche par rapport à la plaque est quelconque et inconnue. L'initialisation détermine tous les paramètres nécessaires au bon fonctionnement.

Cette étape d'initialisation comprend :
- une phase 32 d'initialisation du système (site d'intervention, type de générateur de vapeur, boîte à eau chaude ou froide) : les capteurs de position angulaire de la caméra doivent être correctement initialisés. Il faut centrer manuellement, sur l'écran de contrôle, l'image de l'objectif de la caméra. Une fois cette position obtenue, les compteurs d'angle sont mis à zéro,
- une phase 34 de calibration,
- éventuellement (test 35) une phase 37 de calcul des paramètres donnant la position du système dans l'environnement,
- une phase 33 de chargement des paramètres du système.

Pour réaliser la calibration, on pointe manuellement le centre d'un tube connu et facilement repérable sur la plaque par l'opérateur. Pour le calcul quatre pointages sont suffisants (c'est la limite minimale), mais cinq donnent des résultats plus précis. Saisir plus de points est également possible et augmente encore la précision ; mais cette précision supplémentaire est inutile en utilisation normale et elle augmente le temps de saisie par l'opérateur et le temps de calcul. Les numéros de ligne X et de colonne Y du point visé sont entrés par l'opérateur. Les angles de rotation en degré, φ et θ de la caméra, sont lus par le calculateur.

Les couples de points sont sauvegardés, puis l'opérateur lance le calcul des paramètres recalant le système de prise de vues dans l'environnement du générateur de vapeur pour une position fixe. Après quelques secondes de calcul (sur un ordinateur de type PC 486-33 MHZ par exemple) les paramètres s'affichent et sont sauvegardés sur disque dur. L'exploitation peut commencer.

Pendant l'étape d'exploitation 36 on peut alors choisir l'un des deux modes suivants :
. positionnement automatique de l'axe de la caméra sur le centre d'un trou quelconque, le tube étant désigné par ses coordonnées en X et Y dans le repère plaque ; on peut réaliser des trajectoires préenregistrées ;
. inversement, calcul des coordonnées X et Y du tube correspondant à l'axe optique de la caméra.

Diverses variantes du système de l'invention sont également possibles :
- aide à la calibration du système, l'opérateur positionnant le système approximativement autour du trou souhaité, le centrage précis se faisant automatiquement ;
- calibration automatique, le système se positionnant automatiquement sur un certain nombre de trous préprogrammés et calculant les différents paramètres de calibration ;
- suppression du câble de liaison, la transmission des données et des commandes se faisant alors par transmission hertzienne ;
- utilisation d'un dispositif de déflexion motorisé (par exemple un miroir) équipé de codeurs de position ;
- alarme en cas de déplacement de l'ensemble mobile qui invalide les calculs de calibration.

## Revendications

1. Système de repérage d'un tube dans une boîte à eau de générateur de vapeur comportant :
- au moins un boîtier étanche destiné à être déposé au fond de cette boîte à eau, dans lequel sont disposés :
• une caméra mobile (20),
• un dispositif d'éclairage (22) assurant une luminosité suffisante pour la prise d'image,
• un dispositif de projection mobile (23) d'un indice lumineux,
• un dispositif de fixation (25) ;
- une unité de contrôle (14) des paramètres de prise de vues, de l'éclairage et l'indice lumineux située en dehors de la boîte à eau (10) ;
- un pupitre de commande (17), comportant une unité de visualisation, situé en dehors de la boîte à eau ;
caractérisé en ce que la caméra vidéo (20) est motorisée selon deux axes de rotation AA' et BB', l'un étant dépendant de l'autre, des codeurs absolus étant disposés sur chacun de ces axes pour pouvoir connaître la position de la caméra ; en ce que le dispositif de projection (23) projette sur la surface de la plaque tubulaire l'indice lumineux à l'endroit qui est visualisé au centre de l'image ; et, en ce que l'unité de contrôle à distance (14) permet le contrôle des paramètres de prise de vues, de la position de la caméra donnée par les capteurs absolus, de l'éclairage et du (ou des) indice(s) lumineux.

2. Système selon la revendication 1, caractérisé en ce que la caméra (20) est motorisée selon deux axes de rotation perpendiculaires.

3. Système selon la revendication 2, caractérisé en ce que l'objectif (21) de la caméra (20) possède une focale variable motorisée.

4. Système selon la revendication 2, caractérisé en ce que le dispositif d'éclairage (22) et le dispositif de projection (21) sont solidaires du boîtier de la caméra (20).

5. Système selon la revendication 4, caractérisé en ce que le dispositif de projection (21) émet une croix lumineuse clignotante réalisée grâce à deux spots lasers.

6. Système selon la revendication 5, caractérisé en ce que les deux spots laser sont déviés par des prismes semi-cylindriques.

7. Système selon la revendication 1, caractérisé en ce que le dispositif de fixation comporte un plateau mobile (24) en rotation.

8. Système selon la revendication 1, caractérisé en ce que l'unité de contrôle (14) est reliée à une unité de traitement (16) avec laquelle elle dialogue via une liaison série standard.

9. Procédé de mise en oeuvre du système selon l'une quelconque des revendications précédentes, caractérisé en ce qu'il comprend :
- une étape (30) de mise en place du boîtier étanche dans la boîte à eau du générateur de vapeur ;
- une étape (31) de mise en route du système ;
- une étape (32) d'initialisation du système, les capteurs de position angulaire de la caméra étant correctement initialisés, l'image de l'objectif de la caméra étant centrée manuellement sur l'écran de contrôle, les compteurs d'angle étant mis à zéro une fois cette position obtenue ;
- une étape d'initialisation comprenant la calibration (34) du système durant laquelle on pointe manuellement le centre du tube connu et facilement repérable sur la plaque par l'opérateur, les numéros de ligne (X) et de colonne (Y) du point visé étant entrés par l'opérateur, les angles de rotation en degré (Φ et θ) de la caméra étant lus par le calculateur ; éventuellement le calcul (37) des paramètres donnant la position du système dans l'environnement et le chargement (33) des paramètres du système ;
- une étape de sauvegarde des couples de points, puis de lancement du calcul des paramètres recalant le système de prise de vues dans l'environnement du générateur de vapeur pour une position fixe ;
- une étape (36) d'exploitation.

10. Procédé selon la revendication 9, caractérisé en ce que pendant l'étape d'exploitation on positionne automatiquement l'axe de la caméra sur le centre d'un trou quelconque, le tube étant désigné par ses coordonnées (X et Y) dans le repère plaque, et en ce que l'on peut réaliser des trajectoires préenregistrées.

11. Procédé selon la revendication 9, caractérisé en ce que, pendant l'étape d'exploitation, on calcule des coordonnées (X et Y) du tube correspondant à l'axe optique de la caméra.

## Patentansprüche

1. System zur Positionsidentifizierung einer Leitung in einem Wasserbehälter eines Dampferzeugers, umfassend:
- wenigstens ein dichtes Gehäuse, dazu bestimmt, auf den Boden dieses Wasserbehälters gestellt zu werden, enthaltend:
. eine bewegliche Kamera (20),
. eine Beleuchtungsvorrichtung (22), die eine für die Bildaufnahme ausreichende Helligkeit gewährleistet,
. eine bewegliche Projektionsvorrichtung (23) eines Lichtzeichens,
. eine Befestigungsvorrichtung (25);
- eine Kontrolleinheit (14) der Aufnahmeparameter, der Beleuchtung und des Lichtzeichens, außerhalb des Wasserbehälters (10) angeordnet;
- ein Steuerpult (17) mit einer optischen Anzeigeeinheit, außerhalb des Wasserbehälters angeordnet;
**dadurch gekennzeichnet,**
daß die Videokamera (20) motorisiert ist in zwei Drehachsen AA' und BB', wobei eine von der anderen abhängig ist und auf jeder dieser Achsen Absolutcodierer angeordnet sind, um die Lage der Kamera zu kennen; dadurch, daß die Projektionskamera (23) auf der Oberfläche des Rohrbodens bzw. der Röhrenplatte das Lichtzeichen auf die Stelle projiziert, die in Bildmitte sichtbar gemacht wird; und dadurch, daß die Fernkontrolleinrichtung (14) die Kontrolle der Bildaufnahmeparameter, der durch die Absolutsensoren gelieferten Kamerastellung, der Beleuchtung und des (oder der) Lichtzeichen(s) ermöglicht.

2. System nach Anspruch 1, dadurch gekennzeichnet, daß die Kamera (20) entsprechend zwei senkrechten Drehachsen motorisiert ist.

3. System nach Anspruch 2, dadurch gekennzeichnet, daß das Objektiv (21) der Kamera (20) eine motorisierte variable Brennweite besitzt.

4. System nach Anspruch 2, dadurch gekennzeichnet, daß die Beleuchtungvorrichtung (22) und die Projektionsvorrichtung (21) fest mit dem Gehäuse der Kamera (20) verbunden sind.

5. System nach Anspruch 4, dadurch gekennzeichnet, daß die Projektionsvorrichtung (21) ein blinkendes Lichtkreuz ausstrahlt, realisiert durch zwei Laserspots.

6. System nach Anspruch 5, dadurch gekennzeichnet, daß die beiden Laserspots abgelenkt werden durch halbzylindrische Prismen.

7. System nach Anspruch 1, dadurch gekennzeichnet, daß die Befestigungsvorrichtung eine drehbare Platte (24) umfaßt.

8. System nach Anspruch 1, dadurch gekennzeichnet, daß die Kontrolleinheit (14) verbunden ist mit einer Verarbeitungseinheit (16), mit der sie über eine Standard-Serienleitung im Dialog verkehrt.

9. Verfahren zur Benutzung des Systems nach einem der vorangehenden Ansprüche, dadurch gekennzeichnet, daß es umfaßt:
- einen Schritt (30), um das dichte Gehäuse in den Wasserbehälter des Dampferzeugers zu bringen;
- einen Schritt (31) zur Inbetriebnahme des Systems;
- einen Schritt (32) zur Initialisierung des Systems, wobei die Winkelstellungssensoren bzw. die Winkelcodierer der Kamera manuell auf den Kontrollschirm zentriert werden und die Winkelzähler genullt werden, sobald diese Stellung erreicht ist;
- einen Initialisierungsschritt, der die Kalibrierung (34) des Systems umfaßt, während der man manuell das Zentrum des bekannten und auf der Platte durch den Operator leicht zu ortenden Rohrs anvisiert, wobei die Nummern der Zeile (X) und der Spalte (Y) des anvisierten Punkts durch den Operator eingegeben werden und die Rotationswinkel in Grad (Φ und Θ) der Kamera durch den Rechner gelesen werden; eventuell Berechnen (37) der Parameter, die die Position des Systems in der Umgebung liefern, und Laden (33) der Parameter des Systems;
- einen Schritt des Sicherns bzw. Abspeicherns der Punktepaare, sodann des Startens der Berechnung der Parameter zur Neueinstellung des Bildaufnahmesystems in der Umgebung des Dampferzeugers für eine feststehende Position;
- einen Auswertungsschritt.

10. Verfahren nach Anspruch 9, dadurch gekennzeichnet, daß man während des Auswertungsschritts die Achse der Kamera automatisch auf das Zentrum eines beliebigen Lochs richtet, wobei das Rohr durch seine Koordinaten (X und Y) in dem Platten-Bezugssystem bezeichnet wird, und dadurch, daß man vorher aufgezeichnete Trajektorien realisieren kann.

11. Verfahren nach Anspruch 9, dadurch gekennzeichnet, daß man während des Auswertungsschritts Koordinaten (X und Y) des der optischen Achse der Kamera entsprechenden Rohrs berechnet.

## Claims

1. System for locating a tube in a steam-generator water box, including:
- at least one leaktight housing which is intended to be deposited at the bottom of this water box, and in which:
. a mobile camera (20),
. an illumination device (22) providing sufficient luminosity for photographing,
. a mobile device (23) for projecting a luminous index,
. a fastening device (25)
are arranged;
- a unit (14) for controlling the photographing parameters, the illumination and the luminous index, which is arranged outside the water box (10);
- a control console (17) which includes a display unit and is located outside the water box;
characterized in that the video camera (20) is motorized about two rotation axes AA' and BB', one being dependent on the other, absolute encoders being arranged on each of these axes so as to make it possible to know the position of the camera; in that the projection device (23) projects the luminous index onto the surface of the tube plate, at the location which is displayed at the centre of the image; and in that the remote-control unit (14) makes it possible to control the photographing parameters, the position of the camera, which is given by the absolute sensors, the illumination and the luminous index or indices.

2. System according to Claim 1, characterized in that the camera (20) is motorized about two perpendicular rotation axes.

3. System according to Claim 2, characterized in that the objective (21) of the camera (20) has a motorized variable focal length.

4. System according to Claim 2, characterized in that the illumination device (22) and the projection device (21) are integral with the housing of the camera (20).

5. System according to Claim 4, characterized in that the projection device (21) emits a flashing luminous cross produced by virtue of two laser spots.

6. System according to Claim 5, characterized in that the two laser spots are deviated by semicylindrical prisms.

7. System according to Claim 1, characterized in that the fastening device includes a turntable (24).

8. System according to Claim 1, characterized in that the control unit (14) is connected to a processing unit (16) with which it dialogues via a standard serial link.

9. Method for implementing the system according to any one of the preceding claims, characterized in that it comprises:
- a step (30) of fitting the leaktight housing in the water box of the steam generator;
- a step (31) of starting up the system;
- a step (32) of initializing the system, the sensors for the angular position of the camera being correctly initialized, the image of the objective of the camera being centred manually on the control screen, the angle counters being zeroed once this position has been obtained;
- an initialization step comprising the calibration (34) of the system, during which the centre of the tube which is known and easily locatable on the plate by the operator is manually targeted, the row (X) and column (Y) numbers of the sighted point being entered by the operator, the angles of rotation in degrees (Φ and θ) of the camera being read by the computer; optionally the computation (37) of the parameters giving the position of the system in the environment and the loading (33) of the parameters of the system;
- a step of saving the pairs of points, then of starting the computation of the parameters localizing the photographing system in the environment of the steam generator for a fixed position;
- an operating step (36).

10. Method according to Claim 9, characterized in that, during the operating step, the axis of the camera is positioned automatically on the centre of any hole, the tube being denoted by its coordinates (X and Y) in the plate frame, and in that pre-recorded trajectories may be produced.

11. Method according to Claim 9, characterized in that, during the operating step, the coordinates (X and Y) of the tube corresponding to the optical axis of the camera are computed.
